# EUROPÄISCHE PATENTANMELDUNG

(11) **EP 1 298 415 A2**
(43) Veröffentlichungstag der Anmeldung: **02.04.2003**
(21) Anmeldenummer: 02016624.5
(22) Anmeldetag: 25.07.2002
(51) Int. Cl.: G01C 21/26, G10L 15/28

(54) **Navigationssystem mit Spracherkennung**

(30) Priorität: 27.09.2001 DE 10147734
(71) Anmelder: ROBERT BOSCH GMBH, 70442 Stuttgart (DE)
(72) Erfinder: Gaertner, Ulrich, 31171 Nordstemmen (DE); Kunitz, Katja, 38114 Braunschweig (DE)

(57) **Zusammenfassung**

Die Erfindung betrifft ein Verfahren zum Erkennen einer Spracheingabe, insbesondere einer gesprochenen Bezeichnung, z.B. eines Ortsnamens, bei dem aus der Spracheingabe ein Sprachsignal gebildet wird,
aus einer Gesamtmenge (G) von phonetischen Transkriptionen (4) Untermengen (1a-d, 2a,b) gebildet werden, deren Elemente jeweils ein Kriterium erfüllen,
durch Schneiden der Untermengen (1a-d, 2a,b) eine Schnittmenge (3) gebildet wird, deren Elementeanzahl einen vorgegebenen Vergleichswert nicht überschreitet,
die Elemente dieser Schnittmenge (3) mit dem Sprachsignal verglichen werden, und das Sprachsignal bei phonetischer Ähnlichkeit mit einem der Elemente der Schnittmenge (3) diesem zugeordnet wird.

Weiterhin betrifft die Erfindung eine entsprechende Vorrichtung. Erfindungsgemäß wird eine Erkennung einer Spracheingabe und Zuordnung zu einer geografischen Bezeichnung ohne manuelle Bedienung ermöglicht.

## Beschreibung

Die Erfindung bezieht sich auf ein Verfahren zum Erstellen einer Datenstruktur, insbesondere von phonetischen Transkriptionen für ein sprachbedientes Navigationssystem sowie ein Verfahren und eine Vorrichtung zum Erkennen einer Spracheingabe unter Verwendung eines derartigen Verfahrens.

Fahrzeugnavigationssysteme verwenden in der Regel eine Liste von vorgegebenen Ortsnamen, auf die der Fahrer zur Zieleingabe zugreifen kann. Im allgemeinen erfolgt die Zieleingabe hierbei ausschließlich manuell. Orts- und Straßennahmen werden Buchstabe für Buchstabe über eine Tastenbedienung eingegeben. Hierbei kann ein angefangenes Wort mit der Liste vorgegebener Ortsnamen verglichen und ggf. selbsttätig ergänzt werden.

Die manuelle Eingabe ermöglicht eine genaue Eingabe des betreffenden Ortsnamens, so dass grundsätzlich eine große Anzahl verschiedener Ortsnamen vorgespeichert sein kann. Sie ist jedoch aufwendig zu bedienen und kann zu einer Beeinträchtigung der Aufmerksamkeit des Fahrers führen.

Das erfindungsgemäße Verfahren nach Anspruch 1 sowie die erfindungsgemäße Vorrichtung nach Anspruch 10 weisen demgegenüber insbesondere den Vorteil auf, dass sie eine Erkennung einer Spracheingabe und Zuordnung zu einer geografischen Bezeichnung ohne manuelle Bedienung ermöglichen.

Erfindungsgemäß kann eine Menge mit einer in gewünschter Weise begrenzbaren Elementeanzahl geschaffen werden, indem geeignete Kriterien ausgewählt werden, die für eine Untermengenbildung mit nachfolgender Schnittmengenbildung verwendet werden.

Hierdurch kann insbesondere bei Verwendung in einem Navigationssystem eine herkömmliche Sprachvergleichseinrichtung bzw. ein herkömmlicher Spracherkenner verwendet werden, der einen aktiven Speicher für den Vergleich der Spracheingabe mit einer begrenzten Vergleichsanzahl von phonetischen Transkriptionen aufweist. Diese Vergleichsanzahl begrenzt erfindungsgemäß die Größe der verwendbaren Gesamtmenge jedoch nicht, da die Untermengenbildung durch Kriterien vorgenommen wird. Somit kann eine hohe Bedienungsfreundlichkeit auch bei Auswahl unter einer großen Anzahl von Ortsnamen erfolgen. Die Kriterien werden im allgemeinen im Bedienungskonzept in geeigneter Weise gewählt.

Erfindungsgemäß können neben Ortsnamen auch andere Bezeichnungen, insbesondere Namen von Ortsteilen, Straßenbezeichnungen und Sehenswürdigkeiten erkannt werden.

Für die Kriterien können unterschiedliche Kriterientypen verwendet werden. Zu verschiedenen Kriterientypen werden Untermengen gebildet, die disjunkt oder nicht disjunkt sein können. Kriterientypen können z.B. sein:
Die ersten Ziffern der Postleitzahl, z.B. die ersten beiden Ziffern der Postleitzahl, die Nähe zu einer größeren Stadt, die Region bzw. das Bundesland, die Einwohnerzahl oder die verwaltungsrechtliche Einordnung. Die Kriterien werden dabei jeweils auf die durch die phonetischen Transkriptionen bezeichneten Namen bezogen.
Durch ein Kriterium wird aus der Gesamtmenge eine Untermenge der ersten Generation gebildet, die alle Orte enthält, die dieses Kriterium erfüllen, z.B. das Kriterium "Postleitzahl beginnt mit den Ziffern 33". Eine Verwendung von mehreren Kriterien wird durch Schneiden mehrerer Untermengen erreicht. Hierbei wird eine Untermenge k-ter Generation durch Schneiden von k Untermengen erster Generation erreicht.

Die Untermengen können weiterhin gemäß ihrer Größe bzw. Elementeanzahl in Klassen eingeteilt werden, die jeweils Elementeanzahlen zwischen zwei natürlichen Zahlen einer Zahlenfolge n1, n2, n3,... mit n1<n2<n3<... aufweisen. Eine Menge, für deren Elementeanzahl m gilt, dass nₖ₋₁<m<nₖ ist, wird als Menge vom Level k bezeichnet. Dabei ist n₀ = 0.

Erfindungsgemäß kann zum einen von einer Ausgangsmenge beliebiger Klasse und Generation ausgehend eine Reduzierung der Größe bzw. Elementeanzahl durch Hinzuziehung weiterer Kriterien erfolgen. Bei diesem Konzept kann eine Ausgangsmenge beliebiger Generation und Klasse reduziert werden.

Weiterhin ist es möglich, ohne eine Ausgangsmenge Kriterien in geeigneter Weise zu kombinieren. Hierdurch kann z. B. eine Untermenge gewonnen werden, die alle Orte enthält, die eine gewünschte Kombination von k Kriterien erfüllen. Zu jedem der Kriterien wird hierbei die zugehörige Untermenge der ersten Generation gebildet, wobei die Klasse der einzelnen Untermengen unerheblich ist. Aus diesen Untermengen wird dann die Schnittmenge gebildet. Durch geeignete Wahl der Kriterien kann die Größe der Schnittmenge festgelegt werden.

Die Erfindung wird im folgenden anhand der beiliegenden Zeichnungen an einer Ausführungsform näher erläutert. Es zeigen:
Fig. 1 eine Darstellung der durch ein erfindungsgemäßes Verfahren mittels Kriterienkombination gebildeten Untermengen;
Fig. 2 ein Blockschaltbild einer Vorrichtung gemäß einer Ausführungsform der Erfindung.

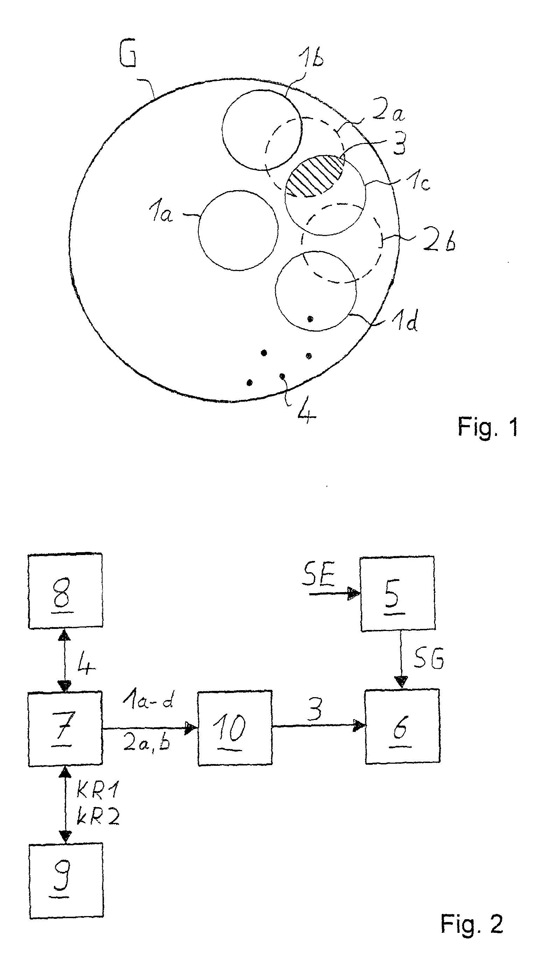

Eine in Fig. 1 gezeigte Gesamtmenge G enthält ca. 80.000 lediglich teilweise eingezeichnete phonetische Transkriptionen 4, die sich auf verschiedene Ortsnamen beziehen. Hierbei können Unterschiede in der Aussprache der Ortsnamen berücksichtigt werden, so dass sich z.T. mehrere phonetische Transkriptionen 4 auf einen Ortsnamen beziehen.

Als erster Kriterientyp werden die ersten beiden Ziffern der Postleitzahl des betreffenden Ortes verwendet. Entsprechende erste Kriterien dieses ersten Kriterientyps legen Untermengen 1a, 1b, 1c, 1d usw, der ersten Generation auf der Gesamtmenge G fest. Hierbei können z.B. die Untermengen 1a, 1b und 1c jeweils den ersten Kriterien "Postleitzahl des Ortes beginnt mit 33", "Postleitzahl des Ortes beginnt mit 34"und "Postleitzahl des Ortes beginnt mit 38" entsprechen und diejenigen phonetischen Transkriptionen 4 als Elemente enthalten, die sich auf entsprechende Ortsnamen beziehen. Weiterhin kann z.B. auch eine nicht gezeigte Untermenge "Postleitzahl des benannten Ortes beginnt mit 33 oder 34 oder 38" ausgewählt werden.

Als zweiter Kriterientyp wird die Einwohnerzahl verwendet. Hierbei legt z.B. das Kriterium "Einwohnerzahl zwischen 200.000 und 500.000" die Untermenge 2a der ersten Generation und das Kriterium "Einwohnerzahl zwischen 500.000 und 1.000.000" die Untermenge 2b der ersten Generation fest.

Durch Schneiden von 2a und 1c ergibt sich eine Untermenge der zweiten Generation, die als schraffierte Schnittmenge 3 eingezeichnet ist und somit die Orte enthält, deren Postleitzahl mit den Ziffern 38 anfängt und deren Einwohnerzahl zwischen 200.000 und 500.000 liegt, z.B. die Stadt Braunschweig.

Gemäß Fig. 2 wird bei der Spracherkennung die Spracheingabe SE einer Spracheingabeeinrichtung 5, z.B. einem Mikrofon, eingegeben, das ein Sprachsignal SG an eine Sprachvergleichseinrichtung 6 ausgibt. Weiterhin wählt eine Auswahleinrichtung 7 die Kriterien KR1, KR2 aus einem Kriterienspeicher 9 und die entsprechenden phonetischen Transkriptionen 4 aus einem Transkriptionsspeicher 8, z.B. einer CD, und bildet hieraus die Untermengen 1a-d und 2a,b. Die Recheneinrichtung 10 ermittelt aus diesen Untermengen die Schnittmenge SM. Die Sprachvergleichseinrichtung 6 vergleicht die phonetischen Transkriptionen der Schnittmenge SM mit dem Sprachsignal SG, wobei z.B. eine Wahrscheinlichkeit einer Übereinstimmung ermittelt werden kann und eine Zuordnung des Sprachsignals SG zu einer phonetischen Transkription 4 bei Überschreiten eines vorgegebenen Wahrscheinlichkeitswertes erfolgen kann.

## Patentansprüche

1. Verfahren zum Erstellen einer Datenstruktur, insbesondere von phonetischen Transkriptionen für ein sprachbedientes Navigationssystem, bei dem
aus einer Gesamtmenge (G) von Daten (4) Untermengen (1a-d, 2a,b) gebildet werden, deren Elemente jeweils ein Kriterium (KR1, KR2) erfüllen, und
durch Schneiden der Untermengen (1a-d, 2a,b) eine Schnittmenge (3) gebildet wird, deren Elementeanzahl einen vorgegebenen Vergleichswert (V) nicht überschreitet.

2. Verfahren nach Anspruch 1, **dadurch gekennzeichnet, dass** Kriterien (KR1, KR2) unterschiedlicher Kriterientypen verwendet werden.

3. Verfahren nach Anspruch 1 oder 2, **dadurch gekennzeichnet, dass** von einer Ausgangsmenge ausgehend, deren Elementeanzahl den Vergleichswert (V) übersteigt, k-1 Kriterien gewählt werden und die k-1 Untermengen, die diese Kriterium erfüllen, gebildet und mit der Ausgangsmenge geschnitten werden, wobei k≥2.

4. Verfahren nach Anspruch 1 oder 2, **dadurch gekennzeichnet, dass** von der Gesamtmenge (G) ausgehend k Kriterien ausgewählt werden und die k Untermengen, die diese Kriterien erfüllen, gebildet und miteinander geschnitten werden, wobei k≥2.

5. Verfahren nach Anspruch 4, **dadurch gekennzeichnet, dass**
eine Folge von ansteigenden natürlichen Zahlen (n1, n2, n3, ...) gewählt wird, die Klassen von Untermengen definieren, deren Elementeanzahl jeweils zwischen zwei aufeinanderfolgenden Zahlen der Folge liegen, wobei die Folge derartig gewählt wird, dass durch Schneiden von k Untermengen, deren Elementeanzahlen jeweils zwischen der k-1-ten und k-ten Zahl der Folge liegen, die Schnittmenge (3) gebildet wird.

6. Verfahren zum Erkennen einer Spracheingabe, insbesondere einer gesprochenen Bezeichnung, z.B. eines Ortsnamens, bei dem
eine Datenstruktur von phonetischen Transkriptionen (4) mit einem Verfahren nach einem der vorherigen Ansprüche erstellt wird,
aus einer Spracheingabe (SE) ein Sprachsignal (SG) gebildet wird, die Elemente der durch Schneiden von Untermengen gebildeten Schnittmenge (3) mit dem Sprachsignal (SG) verglichen werden, und das Sprachsignal (SG) bei phonetischer Ähnlichkeit mit einem der Elemente der Schnittmenge (3) diesem zugeordnet wird.

7. Verfahren nach Anspruch 6, **dadurch gekennzeichnet, dass** auch die Kriterien (KR1, KR2) durch Spracheingabe eingegeben werden.

8. Verfahren nach Anspruch 6 oder 7, **dadurch gekennzeichnet, dass** sich einige der phonetischen Transkriptionen (4) der Gesamtmenge (G) auf eine gemeinsame Bezeichnung beziehen.

9. Verfahren nach einem der Ansprüche 6 bis 8, **dadurch gekennzeichnet, dass** als Kriterientyp Ziffern der Postleitzahl von Orten und/oder eine geografische Nähe des Ortes zu einem anderen Ort und/oder eine den Ort umfassende geographische Region und/oder die Einwohnerzahl des Ortes verwendet werden.

10. Vorrichtung zum Erkennen einer Spracheingabe, insbesondere einer gesprochenen geografischen Bezeichnung, z.B. eines Ortsnamens, mit: einer Spracheingabeeinrichtung (5) zur Aufnahme der Spracheingabe (SE) und Ausgeben eines Sprachsignals (SG),
einer Auswahleinrichtung (7) zum Auswählen von Untermengen (1a-d, 2a,b), deren Elemente jeweils ein Kriterium (KR1, KR2) erfüllen, aus einer Gesamtmenge (G) von phonetischen Transkriptionen (4),
einer Recheneinrichtung (10) zum Bilden mindestens einer Schnittmenge (3) aus den Untermengen, wobei eine Elementeanzahl der Schnittmenge (3) einen vorgegebenen Vergleichswert (V) nicht überschreitet,
einer Sprachvergleichseinrichtung (6) zum Vergleichen der Elemente der Schnittmenge (3) mit dem Sprachsignal (SG) und Zuordnen des Sprachsignals (SG) bei phonetischer Ähnlichkeit zu einem der Elemente der Schnittmenge (3).

11. Vorrichtung nach Anspruch 10, **dadurch gekennzeichnet, dass** die phonetischen Transkriptionen (4) in einem Transkriptionsspeicher (8) gespeichert sind.

12. Vorrichtung nach Anspruch 10 oder 11, **dadurch gekennzeichnet, dass** die Kriterien (KR1, KR2) in einem Kriterienspeicher (9) gespeichert sind.

13. Vorrichtung nach einem der Ansprüche 10 bis 12, **dadurch gekennzeichnet, dass** sich einige der phonetischen Transkriptionen (4) der Gesamtmenge (G) auf eine gemeinsame Bezeichnung beziehen.

14. Vorrichtung nach einem der Ansprüche 10 bis 13, **dadurch gekennzeichnet, dass** Kriterien (KR1, KR2) unterschiedlicher Kriterientypen verwendbar sind.

15. Vorrichtung nach einem der Ansprüche 10 bis 14, **dadurch gekennzeichnet, dass** die Auswahleinrichtung (7) von einer Ausgangsmenge ausgehend, deren Elementeanzahl den Vergleichswert (V) übersteigt, k-1 Kriterien auswählt und die k-1 Untermengen zu diesen Kriterien bildet, und die Recheneinrichtung (10) diese Untermengen mit der Ausgangsmenge zu einer Schnittmenge (3) schneidet, wobei k≥2.

16. Vorrichtung nach einem der Ansprüche 10 bis 14, **dadurch gekennzeichnet, dass** die Auswahleinrichtung (7) von der Gesamtmenge (G) ausgehend k Kriterien (KR1, KR2) auswählt und die Recheneinrichtung (10) die k Untermengen (1a-d, 2a,b) zu diesen Kriterien bildet und miteinander zu einer Schnittmenge (3) schneidet, wobei k≥2.

17. Navigationseinrichtung mit einer Vorrichtung zum Erkennen einer Spracheingabe nach einem der Ansprüche 10 bis 16 und/oder unter Verwendung eines Verfahrens zum Erkennen einer Spracheingabe nach einem der Ansprüche 6 bis 9.
